# EUROPEAN PATENT APPLICATION

(11) **EP 3 038 098 A2**
(43) Date of publication of application: **29.06.2016**
(21) Application number: 15202781.9
(22) Date of filing: 28.12.2015
(51) Int. Cl.: G09G 3/36

(54) **DISPLAY DEVICE**

(30) Priority: 26.12.2014 JP 2014265886
(71) Applicant: Funai Electric Co., Ltd., Daito City Osaka Osaka 574-0013 (JP)
(72) Inventor: NISHIGAKI, Hiroshi, Osaka, Osaka 574-0013 (JP); SUZUKI, Masahiro, Osaka, Osaka 574-0013 (JP); IMADA, Yuji, Osaka, Osaka 574-0013 (JP); MATSUMOTO, Masanori, Osaka, Osaka 574-0013 (JP); NAKAMURA, Yuya, Osaka, Osaka 574-0013 (JP)
(74) Representative: Osha Liang

(57) **Abstract**

A display device (10) includes a display screen (1) that displays an image; and a controller (5) that: obtains a first cumulative value of a blue light output amount from the display screen (1) during a first time period during which the display screen continuously displays the image; and decreases a blue light output from the display screen (1) based on the first cumulative value.

## Description

### [Technical Field]

The present invention generally relates to a display device, and more particularly to the display device that is able to control a light output from a display screen.

### [Background Art]

Conventional display devices are able to control a light output from the display screen (for example, see Patent Literature 1).

The aforementioned Patent Literature 1 discloses that the display device that includes a display screen that display an image and a controller that decreases a blue light output from the display screen. The controller controls to decrease the blue light output gradually (at a constant rate) in accordance with passed time from a start of viewing the image. As a result, because the display device is caused to decrease an amount of the blue light output to eyes of a user (viewer), it may be possible to reduce eye fatigue of the user. Furthermore, decreasing the blue light out changes white balance of the image.

### [Citation List]

### [Patent Literature]

[Patent Literature 1] Japanese Patent Application Publication No. 2013-257457

However, in the aforementioned Patent Literature 1, the blue light output from the display screen is decreased at the constant rate in accordance with passed time from a start of viewing the image. As a result, the blue light output may be uniformly decreased even if the image of the small output of the blue light is continuously viewed. That is, the blue light output may be uniformly decreased even if the small output of the blue light that does not affect the eye fatigue of the user (viewer) is continuously continued. As a result, the white balance of the image may be unnecessary changed. Therefore, when the blue light output that is output from the display screen is a small output that does not affect the eye fatigue, the blue light output should not be decreased.

### [Summary of the Invention]

A display device according to one or more embodiments of the present invention can reduce the eye fatigue of the user by decreasing the blue light output from the display screen appropriately, while preventing unnecessary changes of the white balance of the image.

A display device according to one or more embodiments of the present invention may comprise a display screen that displays an image; and a controller that: obtains a cumulative value of a blue light output amount (amount of blue light output from the display screen) that is sequentially output from the display screen during a first time period during which the display screen continuously displays the image; and decreases the blue light output from the display screen in accordance with the obtained cumulative value.

In the display device according to one or more embodiments of the present invention, as described above, the controller may obtain the cumulative value of the blue light output amount that is sequentially output from the display screen during the first time period during which the display screen continuously displays the image, and may decrease the blue light output from the display screen in accordance with the obtained cumulative value. According to this configuration, when the cumulative value of the blue light output from the display screen is great, the blue light output may be greatly decreased. On the other hand, when the cumulative value of the blue light output from the display screen is small, the blue light output may be slightly decreased (or not be decreased). That is, when the cumulative value of the blue light output is small, for example, when it is not necessary to decrease the blue light output, it may be possible to keep the white balance. Therefore, decreasing the blue light output from the display screen appropriately may cause the eye fatigue of the user to be reduced, while preventing the unnecessary changes of the white balance of the image.

In the display device according to one or more embodiments of the present invention, the controller may control to decrease the blue light output that is output from the display screen in proportion to a ratio of the cumulative value of the blue light output amount from the display screen in the first time period and a maximum cumulative value of when a maximum blue light output amount capable of being output by the display screen continues in the first time period. According to this configuration, because the blue light output from the display screen is decreased in proportion to the ratio of the cumulative value of the blue light output amount from the display screen during the first time period considering the maximum blue light output amount, it may be possible to appropriately evaluate the blue light output amount. As a result, it may be possible to more appropriately estimate the blue light output amount.

According to one or more embodiments of the present invention, the display device may comprise: a light source that emits light to the display screen, wherein the controller may control to decrease the blue light output from the display screen based on: a ratio of the blue light output amount that is output form the display screen during a unit time period that constitutes the first time period based on predetermined image data, and a maximum blue light output amount capable of being output by the display screen during the unit time period, and a ratio of a light output amount that is output from the light source during the unit time period based on a predetermined setting of the light source, and a maximum light output amount capable of being output by the light source during the unit time period. According to this configuration, it may be easily possible to estimate the blue light output based on the ratio of the blue light output amount and the maximum blue light output amount in the display screen and the ratio of the light output amount and the maximum light output amount in the light source instead of providing a light sensor to measure the blue light output separately.

In the display device according to one or more embodiments of the present invention, the controller may control to decrease the blue light output from the display screen, while maintaining a red light output and a green light output from the display screen. According to this configuration, it may be possible to reduce the eye fatigue of the user which is caused by the blue light, while preventing lowering whole brightness, differing from lowering all of the red light output, the green light output, and the blue light output from the display screen.

In the display device according to one or more embodiments of the present invention, the controller may control: to decrease the blue light output from the display screen based on the cumulative value of the blue light during the first time period, and to further decrease the blue light output based on at least one of displaying the image on the display screen continuously during a second time period, current time being within a predetermined time slot, an age of a user viewing the display screen being less than or equal to a certain age, and illuminance around the display screen being less than or equal to predetermined brightness. According to this configuration, when the blue light output is decreased based on displaying the image on the display screen continuously during a second time period, it may be possible to prevent effects of the blue light due to a long time continuous viewing. As a result, it may be possible to more reduce the eye fatigue of the user. When the blue light output is decreased based on the current time being within the predetermined time slot, it may be possible to prevent collapsing the user's biological rhythms due to effects of the blue light (for example, it may be difficult to get to sleep at bedtime). When the blue light output is decreased based on the age of the user viewing the display screen being less than or equal to a certain age, it may be possible to restrict the large blue light output to the user (viewer) at an earlier age who is easily affected by the blue light. As a result, it may be possible to reduce the eye fatigue of the user (viewer) at the earlier age. When the blue light output is decreased based on the illuminance around the display screen being less than or equal to the predetermined brightness, it may be possible to reduce the eye fatigue of the user (viewer) by adopting a daily rhythm of the user (viewer).

According to one or more embodiments of the present invention, the display device may further comprise: a transmitter that transmits a signal to change a color of light to a warm color, wherein the color of light is emitted from a lighting apparatus in a room where the display screen is located, and the controller causes the transmitter to transmit the signal when the controller controls to decrease the blue light output from the display screen. According to this configuration, changing the light from the lighting apparatus to the warm color which has a complementary color relationship with blue emphasizes a display of blue. As a result, it may be possible to prevent discomfort for the user (viewer) for the display screen which decreasingly outputs the blue light.

In the display device according to one or more embodiments of the present invention, the controller may control: to obtain the cumulative value of the blue light output amount that is sequentially output from the display screen during the first time period, and to decrease the blue light output from the display screen in accordance with the obtained cumulative value by switching the image displayed on the display screen so as to be displayed with a complementary color. According to this configuration, it may be possible to decrease the blue light output by switching so that the image displayed on the display screen is displayed with the complementary color (that is, positive and negative reversals) instead of decreasing the blue light directly. As a result, it may be possible to decrease the blue light output using simplified processing such as the positive and negative reversals.

In the display device according to one or more embodiments of the present invention, when a size of the signal transmitted to the display screen to cause the display screen to output the blue light is greater than or equal to the predetermined value, the controller may control to multiply a predetermined constant of proportionality to decrease the blue light output by the blue light output from the display screen. According to this configuration, it may be possible to change characteristics of the blue light output from the display screen on a boundary of the predetermined value. As result, it may be possible to restrict the blue light output of a high gradation side (the side of the relatively large signal transmitted to the display screen) that greatly affects the eye fatigue of the user, while keeping the white balance of a low gradation side (the side of the relatively small signal transmitted to the display screen).

According to one or more embodiments of the present invention, a display device may comprise a display screen that displays an image; and a controller that: obtains a first cumulative value of a blue light output amount from the display screen during a first time period during which the display screen continuously displays the image; and decreases a blue light output from the display screen based on the first cumulative value.

According to one or more embodiments of the present invention, the display device can reduce the eye fatigue of the user by decreasing the blue light output from the display screen appropriately, while preventing unnecessary changes of the white balance of the image.

### [Brief Description of Drawings]

FIG. 1 is a block diagram of an entire configuration of a liquid crystal television apparatus according to one or more embodiments of first to fifth and ninth examples of the present invention.
FIG. 2 is a diagram illustrating a blue light input and output relationship in a liquid crystal panel of the liquid crystal television apparatus according to one or more embodiments of the first example of the present invention.
FIG. 3 is a flowchart diagram illustrating a control processing flow to decrease the blue light output in the liquid crystal panel of the liquid crystal television apparatus according to one or more embodiments of the first example of the present invention.
FIG. 4 is a diagram illustrating a subroutine indicating point obtaining and point accumulation processing in the flowchart diagram of FIG. 3 in detail according to one or more embodiments of the first example of the present invention.
FIG. 5 is a diagram illustrating a subroutine indicating settings processing of the blue light output in the flowchart diagram of FIG. 3 in detail according to one or more embodiments of the first example of the present invention.
FIG. 6 is a flowchart diagram illustrating a control processing flow to decrease the blue light output in the liquid crystal panel of the liquid crystal television apparatus according to one or more embodiments of the second example of the present invention.
FIG. 7 is a diagram illustrating a subroutine indicating setting processing of the blue light output in the flowchart diagram of FIG. 6 in detail according to one or more embodiments of the second example of the present invention.
FIG. 8 is a diagram illustrating a blue light input and output relationship in the liquid crystal panel of the liquid crystal television apparatus according to one or more embodiments of the third example of the present invention.
FIG. 9 is a flowchart diagram illustrating a control processing flow to decrease the blue light output in the liquid crystal panel of the liquid crystal television apparatus according to one or more embodiments of the fourth example of the present invention.
FIG. 10 is a flowchart diagram illustrating a control processing flow to decrease the blue light output in the liquid crystal panel of the liquid crystal television apparatus according to one or more embodiments of the fifth example of the present invention.
FIG. 11 is a block diagram of an entire configuration of the liquid crystal television apparatus according to one or more embodiments of the sixth example of the present invention.
FIG. 12 is a flowchart diagram illustrating a control processing flow to decrease the blue light output in the liquid crystal panel of the liquid crystal television apparatus according to one or more embodiments of the sixth example of the present invention.
FIG. 13 is a block diagram of an entire configuration of the liquid crystal television apparatus according to one or more embodiments of the seventh example of the present invention.
FIG. 14 is a flowchart diagram illustrating a control processing flow to decrease the blue light output in the liquid crystal panel of the liquid crystal television apparatus according to one or more embodiments of the seventh example of the present invention.
FIG. 15 is a block diagram of an entire configuration of the liquid crystal television apparatus and a lighting apparatus according to one or more embodiments of the eighth example of the present invention.
FIG. 16 is a flowchart diagram illustrating a control processing flow to decrease the blue light output in the liquid crystal panel of the liquid crystal television apparatus according to one or more embodiments of the ninth example of the present invention.
FIG. 17 is a flowchart diagram illustrating a control processing flow according to one or more embodiments of a tenth example of the present invention.
FIG. 18 is a flowchart diagram illustrating a control processing flow according to one or more embodiments of an eleventh example of the present invention.
FIG. 19 is a flowchart diagram illustrating a control processing flow according to one or more embodiments of a twelfth example of the present invention.
FIG. 20 is a flowchart diagram illustrating a control processing flow according to one or more embodiments of a thirteenth example of the present invention.

### [Detailed Description of Embodiments]

Embodiments of the present invention will be described in detail below, with reference to the drawings. In the following description of embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid obscuring the invention.

### (First Example)

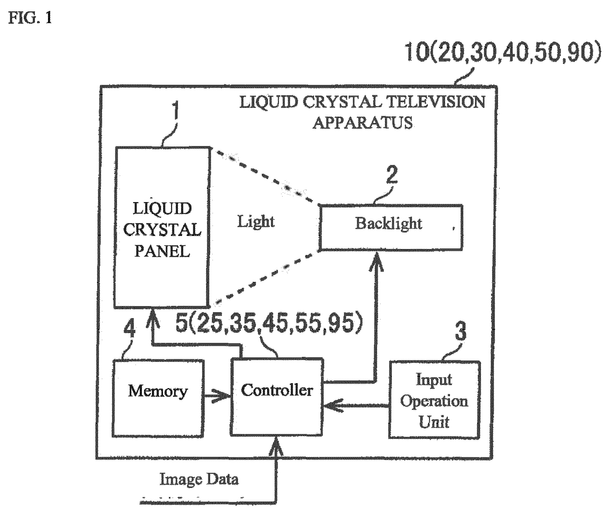

A configuration of a liquid crystal television apparatus 10 according to one or more embodiments of a first example of the present invention will be described with reference to FIGS. 1 to 5. Furthermore, the liquid crystal television apparatus 10 is an example of a "display device".

According to one or more embodiments of the first example of the present invention, as shown in FIG. 1, the liquid crystal television apparatus 10 includes a liquid crystal panel 1, a backlight 2, an input operation unit 3, a memory unit 4, and a controller 5. Furthermore, the liquid crystal panel 1 is an example of the "the display screen". Furthermore, the backlight 2 is an example of a "light source".

In one or more embodiments of the first example, the liquid crystal television apparatus 10 obtains, under a control of the controller 5, a cumulative value (cumulative point) on the blue light output amount that is sequentially output from the liquid crystal panel 1 during the first time period (a time period during which the liquid crystal panel 1 continuously displays the image). The liquid crystal television apparatus 10 decreases, under a control of the controller 5, the blue light output from the liquid crystal panel 1 in accordance with the obtained cumulative value (cumulative point). Those details will be described below. Furthermore, a measurement of the first time period may be started from a view start time point of the liquid crystal television apparatus 10 (a time point when the liquid crystal panel 1 displays the image).

Furthermore, the blue light output from the liquid crystal panel 1 has short wavelength such as approximately 400nm to 500nm in visible light. Moreover, it is considered that the blue light may affect the eye fatigue because light energy of the blue light is high in visible light. It is also considered that the blue light may affect human biological rhythms because it may be considered that the blue light affects secretion suppression of melatonin which is an intracerebral substance that relaxes the user (viewer)'s body.

Next, each configuration of the liquid crystal television apparatus 10 will be described below.

The liquid crystal panel 1 may display the image. The liquid crystal panel 1 includes a plurality of pixels (not shown). The liquid crystal panel 1 adjusts transmittance of light emitted from the backlight 2 by applying voltage to each pixel and displays a desired color on each pixel.

Specifically, each pixel of the liquid crystal panel 1 includes color filters of red (R), green (G), and blue (not shown). The liquid crystal panel 1 displays each pixel with the desired color by adjusting each amount of the light that passes through the color filter of each color.

The liquid crystal panel 1 has eight-bit image information for the color of each pixel. That is, the liquid crystal panel 1 has 256 gradations from 0 to 255 (lighter as a gradation value is larger) for each color of RGB. The liquid crystal panel 1 forms each pixel based on a combination of each RGB color of which gradation is designated.

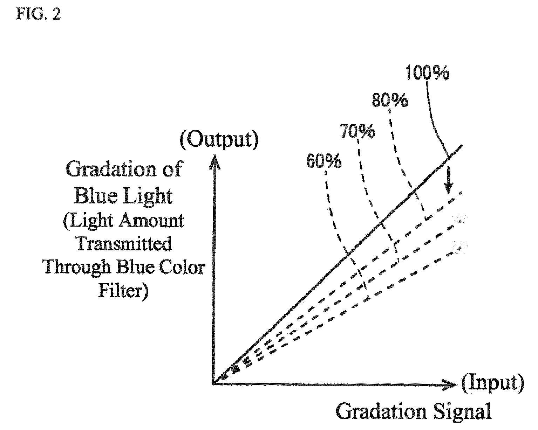

The liquid crystal panel 1 may determine the gradation of the color of each pixel (select one out of 256 gradations) under the controller 5 based on predetermined image data. That is, the liquid crystal panel 1 may determine the gradation of the color of each pixel upon receiving a predetermined gradation signal (referring to FIG. 2) from the controller 5. The liquid crystal panel 1 may determine a gradation of each color (brightness) in proportion to a size of the predetermined gradation signal (referring to FIG. 2) received from the controller 5. Furthermore, the gradation signal is an example of "the signal transmitted to the display screen".

The backlight 2 may be disposed on a back side of the liquid crystal panel 1 (an opposite side of a viewing side). The backlight 2 may emit light from the back side to the liquid crystal panel 1 (each pixel).

The input operation unit 3 may receive setting input of a lower limit value of the blue light output from the liquid crystal television apparatus 10. The set lower limit value may be changed at any time. Furthermore, when the lower limit value is changed, if the changed lower limit value is greater than the blue light output, the blue light output may be increased to the lower limit value changed by the controller 5.

The memory unit 4 stores predetermined information such as the lower limit value input via the input operation unit 3.

The controller 5 may cause the liquid crystal panel 1 to output the blue light of the predetermined gradation by transmitting the gradation signal (referring to FIG. 2) to the liquid crystal panel 1.

As described above, the controller 5 may control to obtain the cumulative value (cumulative point) of the amount of the blue light output from the liquid crystal panel 1 during the first time period from a start of viewing the liquid crystal television apparatus 10 (for example, 3600 sec). The controller 5 may control to decease the blue light output from the liquid crystal panel 1 in accordance with the obtained cumulative value (cumulative point).

At this time, the controller 5 may control to decrease the blue light output from the liquid crystal panel 1, while the controller 5 maintains a red light output and a green light output from the liquid crystal panel 1. Furthermore, when the measurement of the first time period is completed (for example, when 3600 sec passes), the measurement of the first time period is started again after a reset.

A configuration of the controller 5 to obtain the cumulative value (cumulative point) will be described in further detail below.

The controller 5 may decrease the blue light output from the liquid crystal panel 1 based on a ratio (first ratio) of a blue light output amount (Lx) (first cumulative value) from the liquid crystal panel 1 during a unit time period that constitute the first time period and a maximum blue light output amount (Lm) (second cumulative value) capable of being output by the liquid crystal panel 1 during the unit time period and a ratio (second ratio) of a light output amount (Bx) (fourth cumulative value) from the backlight 2 during a unit time period and a maximum light output amount (Bm) (third cumulative value) capable of being output by the backlight 2 during the unit time period. Those details will be described below. Furthermore, the unit time period may be a time period (time) to be required to display one frame. A plurality of unit time periods constitute the first time period. For example, when a display speed of a frame is 2(frame/sec), the unit time period is 0.5 sec.

A ratio (Ux) of the blue light output amount from the liquid crystal television apparatus 10 in the unit time period is calculated by multiplying the aforementioned (Lx/Lm) by the (Bx/Bm). A formula (1) to calculate the ratio (Ux) of the blue light output amount will be shown below.

The ratio (Ux) of the blue light output amount= (Lx/Lm) × (Bx/Bm)

That is, the ratio (Lx/Lm) of the blue light output amount (Lx) and the maximum blue light output amount (Lm) indicates how much an average gradation in one frame out of 256 gradations is. Furthermore, the blue light output amount (Lx) from the liquid crystal panel 1 during the unit time period may be determined based on image data input from an exterior to the controller 5.

For example, one frame may be formed by four pixels. The gradations of the blue light of four pixels are 210, 190, 210, and 190, respectively. In this case, the blue light output amount (Lx) from the liquid crystal panel 1 is 200. Therefore, (Lx/Lm) is 200/256.

The ratio of the light output amount (Bx) to the maximum light output amount (Bm) may be a backlight duty. The backlight duty is an indicator that indicates light intensity. The backlight duty is also the indicator that is determined based on: a ratio of a time period during the driving current flows to the backlight 2 and a sum of a time period during which a driving current flows to the backlight 2 and a time period during the driving current does not flow to the backlight 2; and magnitude of the driving current supplied to the backlight 2. That is, the backlight duty of one or more embodiments of the present invention is the indicator that indicates at a how much ratio of output power and maximum output power the backlight 2 outputs the light. Furthermore, the light output amount (Bx) from the backlight 2 in the unit time period may be determined based on predetermined settings set by the user, for example.

The controller 5 may convert the ratio (Ux) of the output amount in one frame into any of points (P1x) of four levels (0, 1, 2, and 3). The controller 5 may control to obtain the cumulative point (P2x) by accumulating the converted point during the first time period.

The controller 5 may convert the ratio (Ux) of the blue light output amount into the point (P1x) of four levels by comparing a maximum value (Um) of the ratio (Ux) of the output amount.

For example, when (Ux/Um) is less than 0.25, the controller 5 may convert into zero point. When (Ux/Um) is more than or equal to 0.25 and less than 0.50, the controller 5 may convert into 1 point. When (Ux/Um) is more than or equal to 0.50 and less than 0.75, the controller 5 may convert into 2 point. When (Ux/Um) is more than or equal to 0.75, the controller 5 may convert into 3 point.

The controller 5 may accumulate the converted (repeatedly and continuously) points (P1x) during the first time period. For example, when the image of 7200 frames is displayed on the liquid crystal panel 1 in the first time period (when the first time period is 3600 sec and the display speed of the frame is 2(frame/sec)), the controller 5 obtains the cumulative point (P2x) by obtaining the points (P1x) for 7200 times and accumulating the obtained points (P1x) for 7200 times.

The controller 5 may control to decrease the blue light output that is output from the liquid crystal panel 1 in proportion to the ratio of the cumulative value (cumulative point (P2x)) of the blue light output amount from the liquid crystal panel 1 in the first time period and the maximum cumulative value (maximum cumulative point (Pm)) of when the maximum blue light output amount capable of being output by the liquid crystal panel 1 continues in the first time period.

For example, if the maximum cumulative point capable of being obtained in the first time period is (Pm), when (P2x/Pm) is less than 0.25, the controller 5 may not decrease the blue light output. When (P2x/Pm) is more than or equal to 0.25 and less than 0.50, the controller 5 may decrease the blue light output by 20 percent. When (P2x/Pm) is more than or equal to 0.50 and less than 0.75, the controller 5 may decrease the blue light output by 30 percent. When (P2x/Pm) is more than or equal to 0.75, the controller 5 may decrease the blue light output by 40 percent.

Furthermore, the controller 5 may decrease the blue light output gradually at a constant rate (linearly) during a predetermined time (for example, when the blue light output is decreased by 10 percent, it takes 20 sec) instead of decreasing the blue light to a setting value instantly.

Next, a control processing flow to decrease the blue light by the controller 5 will be described below with reference to FIGS. 1 and 3-5.

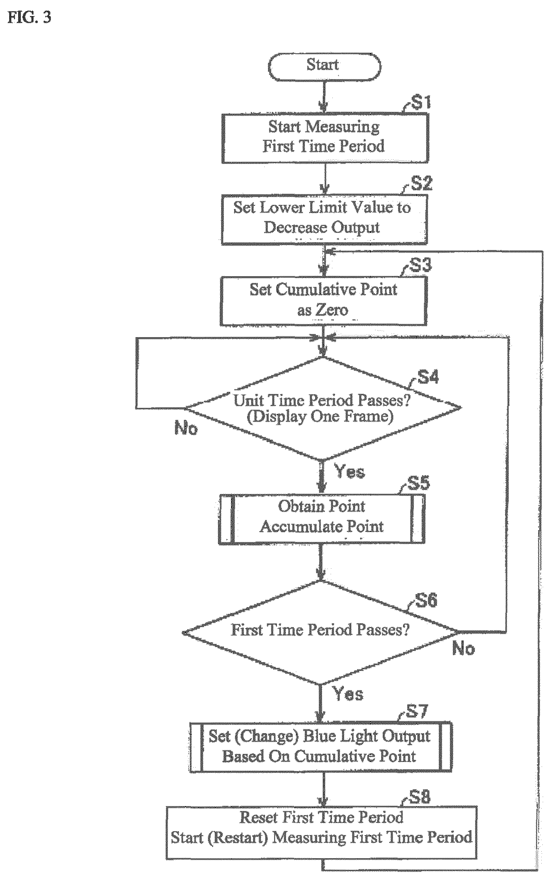

First, as shown in FIG. 3, at a step S1, the controller 5 may start measuring the first time period. That is, when viewing of the liquid crystal television apparatus 10 is started, the measurement of the first time period is started.

At a step S2, the controller 5 may set a lower limit value of a gradation of the blue light output from the liquid crystal panel 1 via the input operation unit 3. The controller 5 may also set the lower limit value of the gradation of the blue light output from the liquid crystal panel 1, which is read from the memory unit 4. Furthermore, the set lower limit value may be changed at any time by the user's setting.

At a step S3, the controller 5 may set (reset) the cumulative value (cumulative point) as zero.

At a step S4, the controller 5 may determine whether the unit time period passes. That is, the controller 5 may determine whether the liquid crystal panel 1 displays the image of one frame or not. When the unit time period does not pass, the step S4 may be repeated until the unit time passes. On the other hand, when the unit time period passes, processing proceeds to a step S5.

At the step S5, the controller 5 may obtain the predetermined point (P1x) based on the ratio (Ux) of the blue light output amount in the unit time period (a time period to be required to display one frame). When the point (P1x) has been already obtained, the newly obtained point (P1x) is accumulated to the already obtained point. Then, processing proceeds to a step S6.

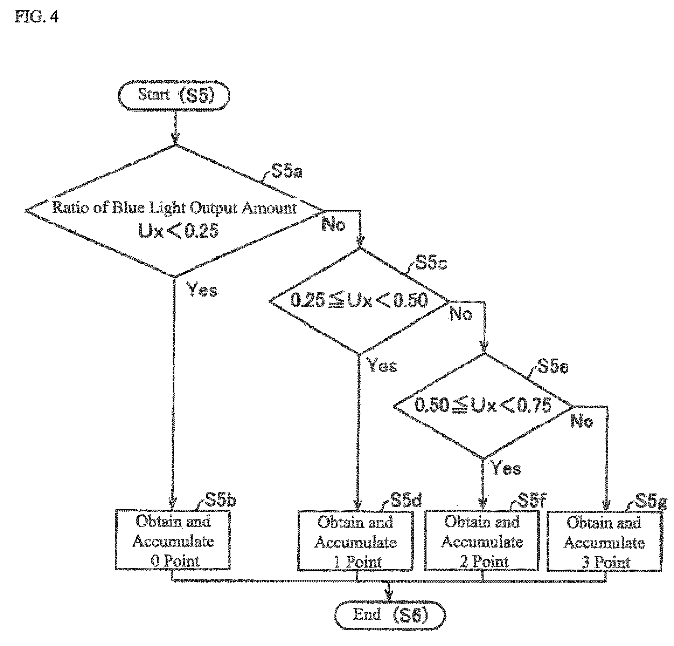

Those details (subroutine) of the step S5 will described below with reference to FIG. 4 before the step S6.

First, at a step S5a, the controller 5 determines whether the ratio (Ux) of the blue light output amount is less than 0.25 or not. When the ratio (Ux) is less than 0.25, processing proceeds to a step S5b, and the controller 5 obtains 0 point and accumulates the point. When the ratio (Ux) is more than or equal to 0.25, processing proceeds to a step S5c.

Next, at the step S5c, the controller 5 determines whether the ratio (Ux) of the blue light output amount is more than or equal to 0.25 and less than 0.50. When the ratio (Ux) is more than or equal to 0.25 and less than 0.50, processing proceeds to a step S5d, and the controller 5 obtains 1 point and accumulates the point. When the ratio (Ux) is more than or equal to 0.50, processing proceeds to a step S5e.

At the step S5e, the controller 5 may determine whether the ratio (Ux) of the blue light output amount is more than or equal to 0.50 and less than 0.75 or not. When (Ux) is more than or equal to 0.50 and less than 0.75, processing proceeds to a step S5f, and then the controller 5 may obtain 2 point and accumulate the point. On the other hand, when (Ux) is more than or equal to 0.75, processing proceeds to a step S5g, and then the controller 5 may obtain 3 point and accumulate the point.

At any one of the steps S5b, S5d, S5f, and S5g, when the controller 5 obtains the point and accumulates the point, processing proceeds to a step S6.

At the step S6, the controller 5 may determine whether the first time period (for example, 3600 sec) passes or not. That is, the controller 5 may determine whether the point (P1x) continuously obtained during the first time period is accumulated or not. That is, the controller 5 may determine whether the cumulative point (P2x) is obtained during the first time period. When the cumulative point (P2x) is not obtained, processing returns to step S4. On the other hand, when the cumulative point (P2x) is obtained, processing proceeds to a step S7.

At the step S7, the controller 5 may perform a setting of the blue light output (decreasing the output) based on the cumulative point (P2x). Then, processing proceeds to a step S8.

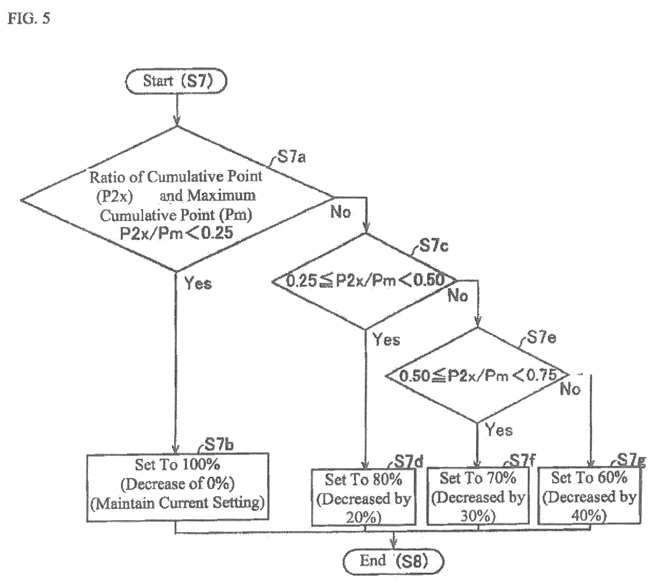

Those details (subroutine) of the step S7 will described below with reference to FIG. 5 before the step S8.

First, at a step S7a, the controller 5 may determine whether the ratio (P2x/Pm) of the cumulative point (P2x) to the maximum cumulative point (Pm) is less than 0.25 or not. When the ratio (P2x/Pm) is less than 0.25, processing proceeds to a step S7b, and then the controller 5 may set the blue light output as 100 percent. That is, the controller 5 may maintain the current setting. On the other hand, the ratio (P2x/Pm) is more than or equal to 0.25, processing proceeds to a step S7c.

At a step S7c, the controller 5 may determine whether the ratio (P2x/Pm) of the blue light output amount is more than or equal to 0.25 and less than 0.50 or not. When the ratio (P2x/Pm) is more than or equal to 0.25 and less than 0.50, processing proceeds to a step S7d, and then the controller 5 may set the blue light output as 80 percent. That is, the controller 5 may decrease the blue light output by 20 percent. When the ratio (P2x/Pm) is more than or equal to 0.50, processing proceeds to a step S7e.

At the step S7e, the controller 5 may determine whether the ratio (P2x/Pm) of the blue light output amount is more than or equal to 0.50 and less than 0.75 or not. When the ratio (P2x/Pm) is more than or equal to 0.50 and less than 0.75, processing proceeds to a step S7f, and then the controller 5 may the blue light output as 70 percent. That is, the controller 5 may decrease the blue light output by 30 percent. When the ratio (P2x/Pm) is more than or equal to 0.75, processing proceeds to a step S7g, and then the controller 5 may set the blue light output as 60 percent. That is, the controller 5 may decrease the blue light output by 40 percent.

Furthermore, when the setting of the blue light output is performed (except for maintaining the current setting), the controller 5 may gradually decrease the blue light output linearly at the constant rate during a predetermined time. When the set lower limit value (for example, 90 percent) is greater than the setting value (60, 70, and 80 percent), the controller 5 may not decrease the blue light output to the setting value but may decrease the blue light to the lower limit value (90 percent).

At any of the steps S7b, S7d, S7f, and S7g, when the setting of the blue light output is performed, processing proceeds to the step S8.

At the step S8, the controller 5 may reset the first time period and start measuring the first time period again. Then, processing returns to the step S3.

According to one or more embodiments of the first example, one or more of the following effects can be obtained.

According to one or more embodiments of the first example, as described above, the controller 5 may obtain the cumulative value of the blue light output amount that is sequentially output from the liquid crystal panel 1 during the first time period during which the liquid crystal panel 1 continuously displays the image, and may decrease the blue light output from the display screen in accordance with the obtained cumulative value. According to this configuration, when the cumulative value of the blue light output from the liquid crystal panel 1 is great, the blue light output may be greatly decreased. On the other hand, when the cumulative value of the blue light output from the liquid crystal panel 1 is small, the blue light output may be slightly decreased (or not be decreased). That is, when the cumulative value of the blue light output is small, for example, when it is not necessary to decrease the blue light output, it may be possible to keep the white balance. Therefore, decreasing the blue light output from the liquid crystal panel 1 appropriately may cause the eye fatigue of the user to be reduced, while preventing the unnecessary changes of the white balance of the image.

According to one or more embodiments of the first example, as described above, the controller 5 may control to decrease the blue light output that is output from the liquid crystal panel 1 in proportion to the ratio of the cumulative value of the blue light output amount from the liquid crystal panel 1 in the first time period and the maximum cumulative value of when the maximum blue light output amount capable of being output by the liquid crystal panel 1 continues in the first time period. According to this configuration, because the blue light output from the liquid crystal panel 1 is decreased in proportion to the ratio of the cumulative value of the blue light output amount from the liquid crystal panel 1 during the first time period considering the maximum blue light output amount, it may be possible to appropriately evaluate the blue light output amount. As a result, it may be possible to more appropriately estimate the blue light output amount.

According to one or more embodiments of the first example, as described above, the liquid crystal television apparatus 10 may further comprise a backlight 2 that emits light to the liquid crystal panel 1. The controller 5 may decrease the blue light output from the liquid crystal panel 1 based on a ratio of the blue light output amount that is output form the liquid crystal panel 1 during a unit time period that constitutes the first time period based on predetermined image data and a maximum blue light output amount capable of being output by the liquid crystal panel 1 during the unit time period, and a ratio of a light output amount that is output from the backlight 2 during the unit time period based on a predetermined setting of the backlight 2 and a maximum light output amount capable of being output by the backlight 2 during the unit time period. According to this configuration, it may be easily possible to estimate the blue light output based on the ratio of the blue light output amount and the maximum blue light output amount in the liquid crystal panel 1 and the ratio of the light output amount and the maximum light output amount in the backlight 2 instead of providing a light sensor to measure the blue light output separately.

According to one or more embodiments of the first example, as described above, the controller 5 may control to decrease the blue light output from the liquid crystal panel 1, while maintaining a red light output and a green light output from the display screen. According to this configuration, it may be possible to reduce the eye fatigue of the user which is caused by the blue light, while preventing lowering whole brightness, differing from lowering all of the red light output, the green light output, and the blue light output from the liquid crystal panel 1.

### (Second Example)

Next, embodiments of a second example will be described with reference to FIGS. 1, 6, and 7. According to one or more embodiments of the second example, the ratio (Ux) of the blue light output amount may be converted into a four-level point, as a result, the point (P1x) is obtained and the obtained is accumulated. Furthermore, according to one or more embodiments of the second example, the ratio (Ux) of the blue light output amount may be obtained, the obtained ratio (Ux) of the blue light output amount may be accumulated, and the blue light output may be decreased in accordance with the cumulative value (U2x), differing from one or more embodiments of the first example such as decreasing the blue light output in accordance with the cumulative point (P2x). Furthermore, configurations similar to the configurations of one or more embodiments of the first example have same reference numbers and are illustrated, and the description will be omitted. Furthermore, the liquid crystal television apparatus 20 is an example of "display device".

As shown in FIG. 1, in the liquid crystal television apparatus 20 according to one or more embodiments of the second example, a controller 25 may obtain the cumulative value of the blue light output amount from the liquid crystal panel 1 during the first time period. The controller 25 may control to decrease the blue light output from the liquid crystal panel 1 in accordance with the obtained cumulative value.

The controller 25 may control to obtain the cumulative value (U2x) by accumulating the ratio (Ux) of the output amount in one frame during the first time period.

The controller 25 may control to decrease the blue light output that is output from the liquid crystal panel 1 in proportion to the ratio (U2x/U2m) of the cumulative value (U2x) of the blue light output amount from the liquid crystal panel 1 in the first time period and the maximum cumulative value (U2m) of when the maximum blue light output amount capable of being output by the liquid crystal panel 1 continues in the first time period. Furthermore, (U2m) may be a cumulative value of (Ux) during the first time period when (Lx/Lm) is equal to 1 and (Bx/Bm) is equal to 1 in the following formula as described in one or more embodiments of the first example of the present invention.

The ratio (Ux) of the blue light output amount= (Lx/Lm) × (Bx/Bm)

That is, (U2m) may be a value that is equal to a cumulative frequency. For example, when the image of 7200 frames is displayed in the first time period, (U2m) is equal to 7200.

Next, a control processing flow to decrease the blue light by the controller 25 will be described below with reference to FIGS. 1, 6, and 7. Furthermore, in the description below, processing similar to processing (step) of FIG. 3 in one or more embodiments of the first example has the same reference number and the description will be omitted.

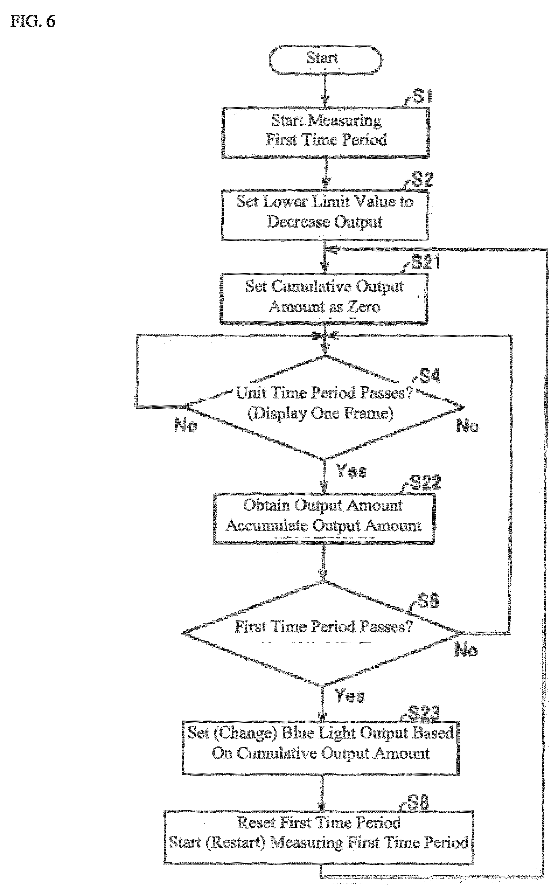

First, at the step S2 in FIG. 6, the controller 25 may set the lower limit value of the gradation of the blue light based on the user's input operation. Next, at a step S21, the controller 25 may set (reset) a cumulative output amount (U2x) of the blue light as zero.

After the step S4, at a step S22, the controller 25 may obtain the ratio (Ux) of the blue light output amount in the unit time period (time period to be required to display one frame). When the ratio (Ux) of the output amount has been already obtained, the newly obtained ratio (Ux) of the output amount may be accumulated to the already obtained ratio (Ux) of the output amount. Processing then proceeds to the step S6.

At the step S6, the controller 25 may determine whether the first time period (for example, 3600 sec) passes or not. When the first time period does not pass, processing returns to the step S4. On the other hand, when the first time period passes, processing proceeds to a step S23.

At the step S23, the controller 25 may perform setting (changing) (decreasing of the output) of the blue light output based on the cumulative output amount (U2x). Processing then proceeds to the step S8.

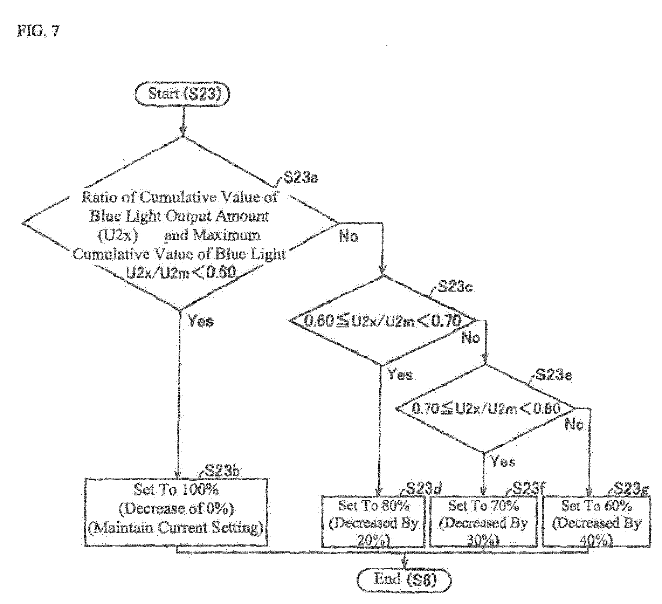

Those details of step S23 (subroutine) will be described below before the step S8, with reference to FIG. 7.

First, at a step S23a, when the ratio (U2x/U2m) of the cumulative value (U2x) of the blue light output amount and the maximum cumulative value (U2m) (=1) of the blue light is less than 0.60, processing proceeds to a step S23b, and then the controller 5 may set the blue light output as 100 percent. That is, the controller 5 may maintain the current setting. On the other hand, the ratio (U2x/U2m) is more than or equal to 0.60, processing proceeds to a step S23c.

At the step S23c, the controller 25 may determine whether the ratio (U2x/U2m) of the blue light output amount is more than or equal to 0.60 and less than 0.70 or not. When the ratio (U2x/U2m) is more than or equal to 0.60 and less than 0.70, processing proceeds to a step S23d, and then the controller 5 may set the blue light output as 80 percent. That is, the controller 5 may decrease the blue light output by 20 percent. When the ratio (U2x/U2m) is more than or equal to 0.70, processing proceeds to a step S23e.

At the step S23e, the controller 25 may determine whether the ratio (U2x/U2m) of the blue light output amount is more than or equal to 0.70 and less than 0.80 or not. When the ratio (U2x/U2m) is more than or equal to 0.70 and less than 0.80, processing proceeds to a step S23f, and then the controller 5 may set the blue light output as 70 percent. That is, the controller 5 may decrease the blue light output by 30 percent. When the ratio (U2x/U2m) is more than 0.80, processing proceeds to a step S23g, and then the controller 5 may set the blue light output as 60 percent. That is, the controller 5 may decrease the blue light output by 40 percent.

At any one of the steps S23b, S23d, S23f, and S23g, when the setting (change) of the blue light output is performed, processing proceeds to the step S8.

At the step S8, the controller 25 may reset the first time period and start measuring the first time period again. Processing then proceeds to the step S21.

According to one or more embodiments of the second example, one or more of the following effects can be obtained.

According to one or more embodiments of the second example, like one or more embodiments of the first example, the controller 25 may obtain the cumulative value of the blue light output amount that is sequentially output from the liquid crystal panel 1 during the first time period during which the liquid crystal panel 1 continuously displays the image, and may decrease the blue light output from the display screen in accordance with the obtained cumulative value. As a result, decreasing the blue light output from the liquid crystal panel 1 appropriately may cause the eye fatigue of the user to be reduced, while preventing the unnecessary changes of the white balance of the image.

### (Third Example)

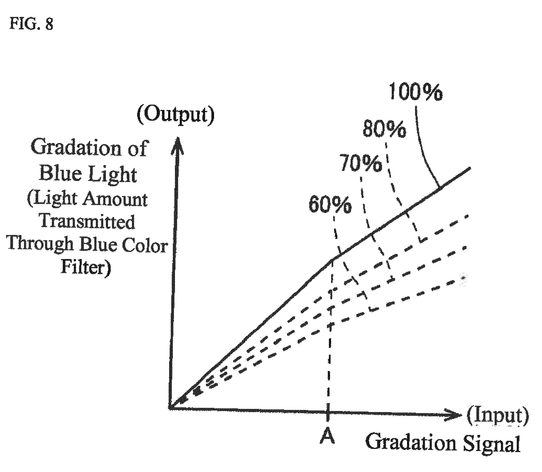

Next, embodiments of a third example will be described below with reference to FIGS. 1 and 8. According to one or more embodiments of the third example, when the gradation signal is more than or equal to a predetermined value A, an increase ratio of the gradation (output) of the blue light in accordance with the increase of the gradation signal (input) may be changed (decreased), differing from one or more embodiments of the first example where the gradation (output) of the blue light is always increased at the constant rate in accordance with the increase of the signal (input). Furthermore, configurations similar to the configurations of one or more embodiments of the first example have same reference numbers and are illustrated, and the description will be omitted. A liquid crystal television apparatus 30 is an example of the "display device".

As shown in FIG. 8, in the liquid crystal television apparatus 30 (referring to FIG. 1) according to one or more embodiments of the third example, the liquid crystal panel 1 (referring to FIG. 1) may determine the gradation (brightness) of the blue light in proportion to the size of the predetermined gradation signal received from the controller 35 (referring to FIG. 1).

The controller 35 may output the blue light of the gradation similar to one or more embodiments of the first example when the gradation signal that is less than or equal to the predetermined value A is transmitted to the liquid crystal panel 1. The controller 35 may output the blue light of the gradation that is smaller than the gradation of one or more embodiments of the first example when the gradation signal that is more than the predetermined value A is transmitted to the liquid crystal panel 1.

That is, the controller 35 may obtain the gradation (output) of the blue light based on the constant of proportionality that is different between when the gradation signal that is more than the predetermined value A is transmitted to the liquid crystal panel 1 and when the gradation signal that is less than or equal to the predetermined value A is transmitted to the liquid crystal panel 1. For example, when the constant of proportionality that is less than or equal to the predetermined value A is cl, the constant of proportionality that is more than the predetermined value A is c2 that is smaller value than cl. The controller 35 may control to change the constant of proportionality on a boundary of the predetermined value A similarly when the blue light output is decreased.

According to one or more embodiments of the third example, one or more of the following effects can be obtained.

According to one or more embodiments of the third example, like one or more embodiments of the first example, the controller 35 may obtain the cumulative value of the blue light output amount that is sequentially output from the liquid crystal panel 1 during the first time period during which the liquid crystal panel 1 continuously displays the image, and may decrease the blue light output from the display screen in accordance with the obtained cumulative value. As a result, decreasing the blue light output from the liquid crystal panel 1 appropriately may cause the eye fatigue of the user to be reduced, while preventing the unnecessary changes of the white balance of the image.

According to one or more embodiments of the third example, as described above, when the size of the gradation signal transmitted to the liquid crystal panel 1 to cause the liquid crystal panel 1 to output the blue light is greater than or equal to the predetermined value A, the controller 35 may control to multiply a predetermined constant of proportionality to decrease the blue light output by the blue light output from the liquid crystal panel 1. According to this configuration, it may be possible to change characteristics of the blue light output from the liquid crystal panel 1 on a boundary of the predetermined value A. As result, it may be possible to restrict the blue light output of a high gradation side (the side of the relatively large gradation signal transmitted to the liquid crystal panel 1) that greatly affects the eye fatigue of the user, while keeping the white balance of a low gradation side (the side of the relatively small gradation signal transmitted to the liquid crystal panel 1).

### (Fourth Example)

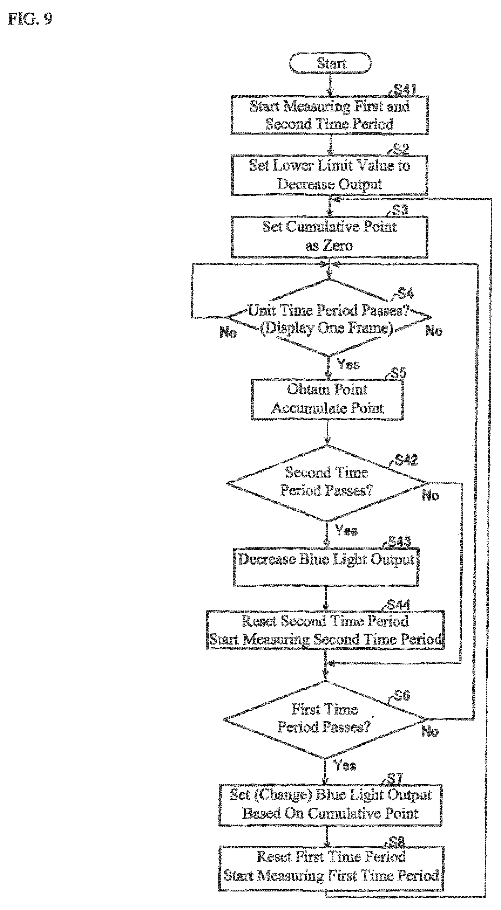

Next, embodiments of a fourth example will be described with reference to FIGS. 1 and 9. According to one or more embodiments of the fourth example, in addition to the control of one or more embodiments of the first example, the blue light output may be decreased if the image is displayed on the liquid crystal panel 1 continuously during the second time period. Furthermore, configurations similar to the configurations of one or more embodiments of the first example have same reference numbers and are illustrated, and the description will be omitted. Furthermore, the liquid crystal television apparatus 40 is an example of the "display device".

As shown in FIG. 1, in the liquid crystal television apparatus 40 according to one or more embodiments of the fourth example, the controller 45 controls to obtain the cumulative value (cumulative point) of the blue light output amount from the liquid crystal panel 1 during the first time period. The controller 45 controls to decrease the blue light output from the liquid crystal panel 1 based on the obtained cumulative value (cumulative point).

According to one or more embodiments of the fourth example, the controller 45 may further decrease the blue light output by a predetermined ratio if the image is displayed continuously during the second time period, in addition to the aforementioned control to decrease the blue light output from the liquid crystal panel 1 based on the cumulative value (cumulative point) of the blue light in the first time period. For example, the controller 45 may decrease the blue light output by 5 percent uniformly when 0.5 hours of the second time period passes.

Next, a control processing flow to decrease the blue light by the controller 45 will be described below with reference to FIGS. 1 and 9. Furthermore, in the description below, processing similar to processing (step) of FIG. 3 in one or more embodiments of the first example has the same reference number and the description will be omitted.

First, as shown in FIG. 9, at a step S41, the controller 45 may start measuring the first time period and the second time period. That is, when viewing of the liquid crystal television apparatus 40 is started, the measurements of the first time period and the second time period are started. After the steps S2-S5, processing proceeds to a step 42.

At the step S42, the controller 45 may determine whether the second time period passes or not. When the second time period does not pass, processing proceeds to the step S6. On the other hand, when the second time period passes, processing proceeds to a step 43.

At the step S43, the controller 45 may decrease the blue light output by a predetermined ratio (for example, 5 percent). At a step S44, the controller 45 may reset the second time period and start measuring the second time period again. Then, processing proceeds to the step 6.

According to one or more embodiments of the fourth example, one or more of the following effects can be obtained.

According to one or more embodiments of the fourth example, like one or more embodiments of the first example, the controller 45 may obtain the cumulative value of the blue light output amount that is sequentially output from the liquid crystal panel 1 during the first time period during which the liquid crystal panel 1 continuously displays the image, and may decrease the blue light output from the display screen in accordance with the obtained cumulative value. As a result, decreasing the blue light output from the liquid crystal panel 1 appropriately may cause the eye fatigue of the user to be reduced, while preventing the unnecessary changes of the white balance of the image.

According to one or more embodiments of the fourth example, as described above, the controller 45 may control to decrease the blue light output from the liquid crystal panel 1 based on the cumulative value of the blue light during the first time period, and to further decrease the blue light output if the image is displayed on the liquid crystal panel 1 continuously during the second time period. As a result, when the blue light output is decreased if the image is displayed on the liquid crystal panel 1 continuously during a second time period, it may be possible to prevent effects of the blue light due to a long time continuous viewing.

### (Fifth Example)

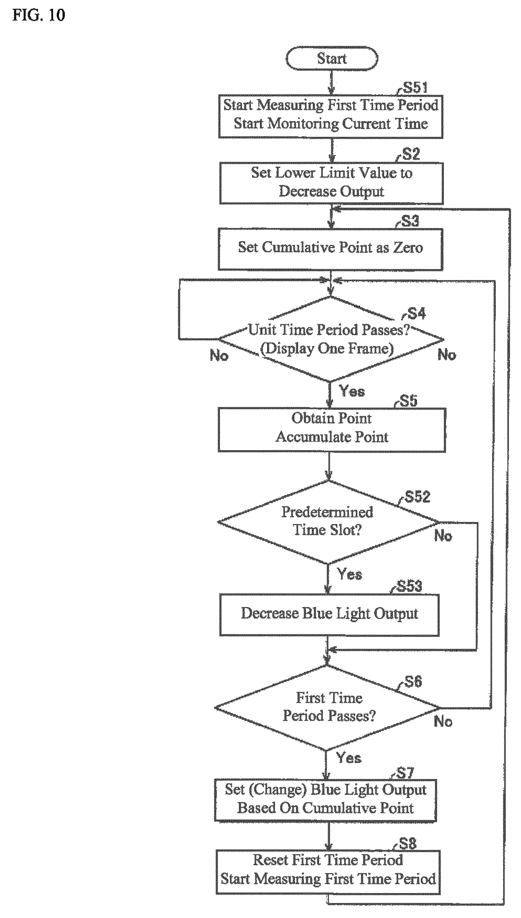

Next, embodiments of a fifth example will be described below with reference to FIGS. 1 and 10. According to one or more embodiments of the fifth example, in addition to the control of one or more embodiments of the first example, the blue light output may be decreased if current time is within a predetermined time slot. Furthermore, configurations similar to the configurations of one or more embodiments of the first example have same reference numbers and are illustrated, and the description will be omitted. Furthermore, the liquid crystal television apparatus 50 is an example of the "display device".

As shown in FIG. 1, in the liquid crystal television apparatus 50 according to one or more embodiments of the fifth example, the controller 55 controls to obtain the cumulative value (cumulative point) of the blue light output amount from the liquid crystal panel 1 during the first time period. The controller 55 controls to decrease the blue light output from the liquid crystal panel 1 based on the obtained cumulative value (cumulative point).

According to one or more embodiments of the fifth example, the controller 55 may further decrease the blue light output by the predetermined ratio if the current time is within the predetermined time slot, in addition to the aforementioned control to decrease the blue light output from the liquid crystal panel 1 based on the cumulative value (cumulative point) of the blue light in the first time period.

Furthermore, the memory unit 4 stores time slot information to control to decrease the blue light output. The time slot information may be information indicating a time slot to decrease the output of the blue light set by the user and the like.

Next, a control processing flow to decrease the blue light by the controller 55 will be described below with reference to FIGS. 1 and 10. Furthermore, in the description below, processing similar to processing (step) of FIG. 3 in one or more embodiments of the first example has the same reference number and the description will be omitted.

First, at a step S51, the controller 55 may start measuring the first time period and start monitoring the current time. Next, after the steps S2-S5, processing proceeds to a step S52.

At the step S52, the controller 55 may determine whether the current time is time set (stored) as the time slot information or not based on the time slot information stored in the memory unit 4. When the current time is not the time set as the time slot information, processing proceeds to the step S6. When the current time is the time set as the time slot information, processing proceeds to a step S53. For example, if a time slot between 6 pm to 6 am is set as the time slot information, when the current time is 8 pm, processing proceeds to the step 53.

At the step S53, the controller 55 may decrease the blue light output by the predetermined ratio (for example, 10 percent). Processing then proceeds to the step 6.

According to one or more embodiments of the fifth example, one or more of the following effects can be obtained.

According to one or more embodiments of the fifth example, like one or more embodiments of the first example, the controller 55 may obtain the cumulative value of the blue light output amount that is sequentially output from the liquid crystal panel 1 during the first time period during which the liquid crystal panel 1 continuously displays the image, and may decrease the blue light output from the display screen in accordance with the obtained cumulative value. As a result, decreasing the blue light output from the liquid crystal panel 1 appropriately may cause the eye fatigue of the user to be reduced, while preventing the unnecessary changes of the white balance of the image.

According to one or more embodiments of the fifth example, as described above, the controller 55 may control to decrease the blue light output from the liquid crystal panel 1 based on the cumulative value of the blue light during the first time period, and to further decrease the blue light output if current time is within the predetermined time slot. As a result, when the blue light output is decreased based on the current time being within the predetermined time slot, it may be possible to prevent collapsing the user's biological rhythms due to effects of the blue light (for example, it may be difficult to get to sleep at bedtime).

### (Sixth Example)

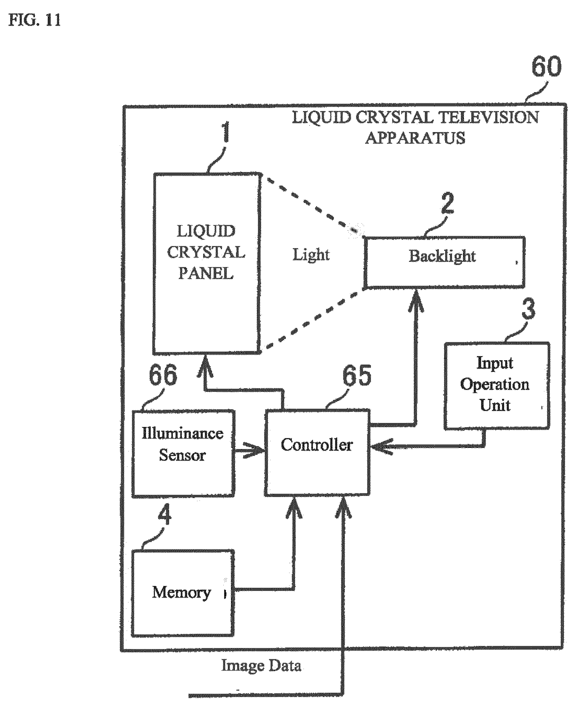

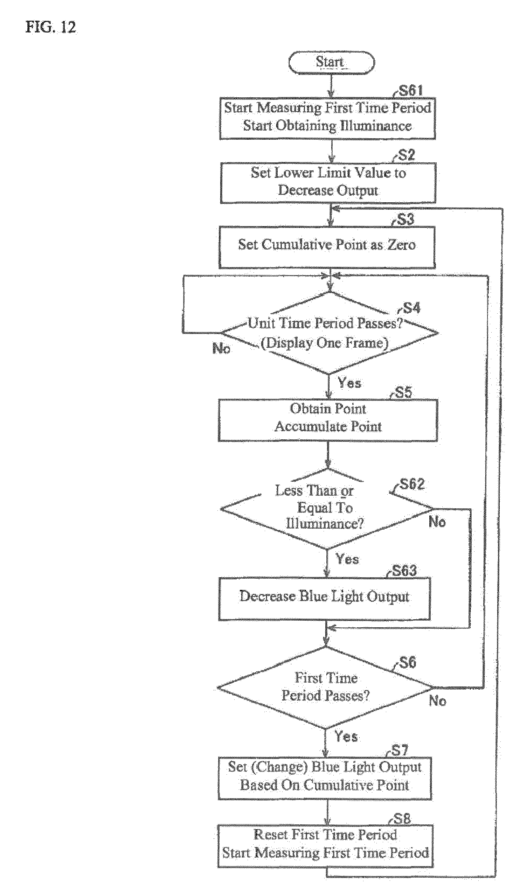

Next, embodiments of a sixth example will be described with reference to FIGS. 11 and 12. According to one or more embodiments of the sixth example, in addition to the control of one or more embodiments of the first example, the blue light output may be decreased based on illuminance around the liquid crystal panel 1 being less than or equal to predetermined brightness. Furthermore, configurations similar to the configurations of one or more embodiments of the first example have same reference numbers and are illustrated, and the description will be omitted. The liquid crystal television apparatus 60 is an example of the "display device".

As shown in FIG. 11, in the liquid crystal television apparatus 60 according to one or more embodiments of the sixth example, the controller 65 controls to obtain the cumulative value (cumulative point) of the blue light output amount from the liquid crystal panel 1 during the first time period. The controller 65 controls to decrease the blue light output from the liquid crystal panel 1 based on the obtained cumulative value (cumulative point).

According to one or more embodiments of the sixth example, the controller 65 may further decrease the blue light output by the predetermined ratio based on the illuminance around the liquid crystal panel 1 being less than or equal to the predetermined brightness, in addition to the aforementioned control to decrease the blue light output from the liquid crystal panel 1 based on the cumulative value (cumulative point) of the blue light in the first time period.

The liquid crystal television apparatus 60 may further include an illuminance sensor 66. For example, although not illustrated, the illuminance sensor 66 may be disposed around the liquid crystal panel 1. Thus, the illuminance sensor 66 may measure an amount (illuminance) of ambient light (environmental light) of the liquid crystal panel 1.

Furthermore, the memory unit 4 stores threshold value illuminance information to control to decrease the blue light output. The threshold value illuminance information may be information indicating illuminance (threshold value illuminance) that is a threshold value (the blue light output is decreased when the illuminance around the liquid crystal panel 1 is less than or equal to the threshold value) to decrease the blue light output.

Next, a control processing flow to decrease the blue light by the controller 65 will be described below with reference to FIGS. 11 and 12. Furthermore, in the description below, processing similar to processing (step) of FIG. 3 in one or more embodiments of the first example has the same reference number and the description will be omitted.

First, at a step S61, the controller 65 may start measuring the first time period and may start obtaining illuminance around the liquid crystal panel 1 via the illuminance sensor 66. Next, after the steps S2-S5, processing proceeds to a step S62.

At the step S62, the controller 65 may determine whether the illuminance obtained from the illuminance sensor 66 is less than or equal to the threshold value illuminance or not based on the threshold value illuminance information stored in the memory unit 4. When the obtained illuminance is more than the threshold value illuminance, processing proceeds to the step 6. On the other hand, when the obtained illuminance is less than or equal to the predetermined illuminance, processing proceeds to a step S63. For example, if the threshold value illuminance is set to 300 lux, when the illuminance obtained from the illuminance sensor 66 is 280 lux, processing proceeds to the step 63.

At the step S73, the blue light output may be decreased by the predetermined ratio (for example, 10 percent). Then, processing proceeds to the step 6.

According to one or more embodiments of the sixth example, one or more of the following effects can be obtained.

According to one or more embodiments of the sixth example, like one or more embodiments of the first example, the controller 65 may obtain the cumulative value of the blue light output amount that is sequentially output from the liquid crystal panel 1 during the first time period during which the liquid crystal panel 1 continuously displays the image, and may decrease the blue light output from the display screen in accordance with the obtained cumulative value. As a result, decreasing the blue light output from the liquid crystal panel 1 appropriately may cause the eye fatigue of the user to be reduced, while preventing the unnecessary changes of the white balance of the image.

According to one or more embodiments of the sixth example, as described above, the controller 65 may control to decrease the blue light output from the liquid crystal panel 1 based on the cumulative value of the blue light during the first time period, and to further decrease the blue light output based on illuminance around the liquid crystal panel 1 being less than or equal to predetermined brightness. As a result, when the blue light output is decreased based on the illuminance around the liquid crystal panel 1 being less than or equal to the predetermined brightness, it may be possible to reduce the eye fatigue of the user (viewer) by adopting a daily rhythm of the user (viewer).

### (Seventh Example)

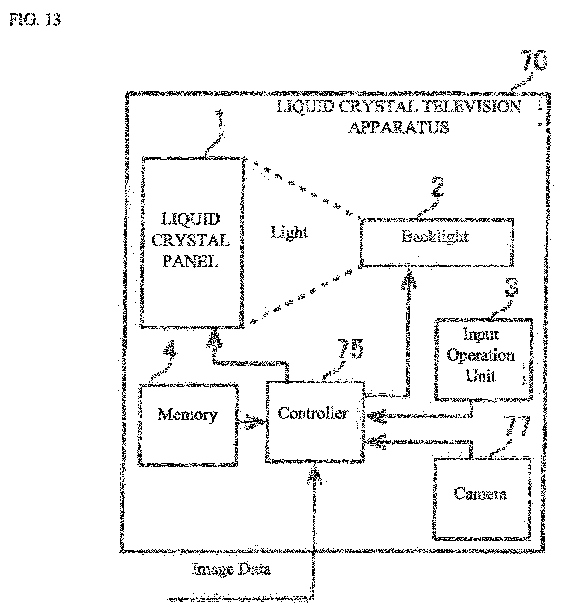

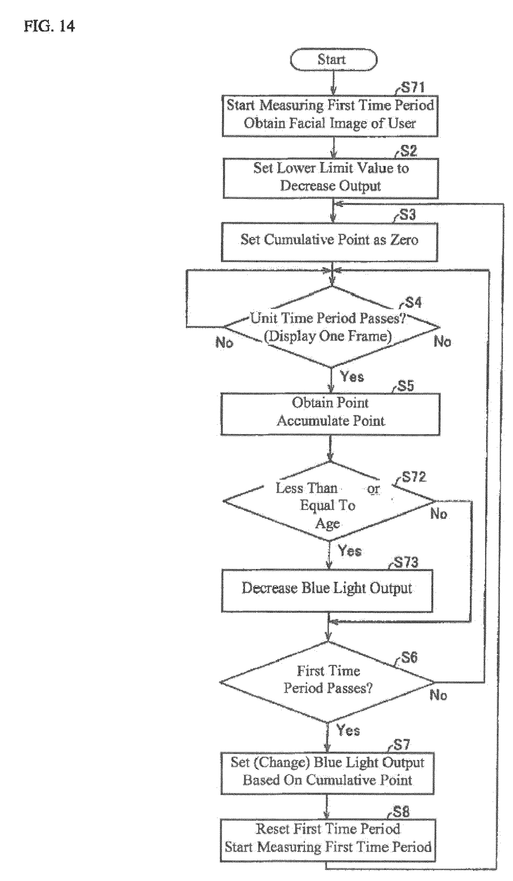

Next, embodiments of a seventh example will be described below with reference to FIGS. 13 and 14. According to one or more embodiments of the seventh example, in addition to the control of one or more embodiments of the first example, the blue light output may be decreased based on an age of the user viewing the liquid crystal panel 1 being less than or equal to a certain age in addition to the control of one or more embodiments of the first example. Furthermore, configurations similar to the configurations of one or more embodiments of the first example have same reference numbers and are illustrated, and the description will be omitted. The liquid crystal television apparatus 70 is an example of the "display device".

As shown in FIG. 13, in the liquid crystal television apparatus 70 according to one or more embodiments of the seventh example, the controller 75 controls to obtain the cumulative value (cumulative point) of the blue light output amount from the liquid crystal panel 1 during the first time period. The controller 75 controls to decrease the blue light output from the liquid crystal panel 1 based on the obtained cumulative value (cumulative point).

According to one or more embodiments of the seventh example, the controller 75 may further decrease the blue light output based on the age of the user viewing the liquid crystal panel 1 being less than or equal to the certain age, in addition to the aforementioned control to decrease the blue light output from the liquid crystal panel 1 based on the cumulative value (cumulative point) of the blue light in the first time period.

The liquid crystal television apparatus 70 may further include a camera 77. Although not illustrated, the camera 77 may be disposed facing the user viewing the liquid crystal television apparatus 70 and may automatically photograph a user's facial image. The controller 75 may determine (estimate) whether the age of the user (viewer) is less than or equal to the certain age or not based on the photographed facial image. Furthermore, the memory unit 4 stores the facial image photographed by the camera 77.

Next, a control processing flow to decrease the blue light by the controller 75 will be described below with reference to FIGS. 13 and 14. Furthermore, in the description below, processing similar to processing (step) in FIG. 3 in one or more embodiments of the first example has the same reference number and the description will be omitted.

First, at a step S71, the controller 75 may start measuring the first time period and may obtain (photograph) the facial image of the user (viewer) via the camera 77. Next, after steps S2-S5, processing proceeds to a step 72.

At the step S72, the controller 75 may determine (estimate) whether the age of the user is less than or equal to the certain age (for example, 15 years old) or not based on the obtained facial image. When the age of the user is determined (estimated) to be more than the certain age, processing proceeds to the step 6. On the other hand, when the age of the user is determined (estimated) to be less than or equal to the certain age, processing proceeds to a step 73.

At the step S73, the blue light output may be decreased by the predetermined ratio (for example, 10 percent). Processing then proceeds to the step S6.

According to one or more embodiments of the seventh example, one or more of the following effects can be obtained.

According to one or more embodiments of the seventh example, like one or more embodiments of the first example, the controller 75 may obtain the cumulative value of the blue light output amount that is sequentially output from the liquid crystal panel 1 during the first time period during which the liquid crystal panel 1 continuously displays the image, and may decrease the blue light output from the display screen in accordance with the obtained cumulative value. As a result, decreasing the blue light output from the liquid crystal panel 1 appropriately may cause the eye fatigue of the user to be reduced, while preventing the unnecessary changes of the white balance of the image.

According to one or more embodiments of the seventh example, as described above, the controller 75 may control to decrease the blue light output from the liquid crystal panel 1 based on the cumulative value of the blue light during the first time period, and to further decrease the blue light output based on the age of a user viewing the liquid crystal panel 1 being less than or equal to a certain age. According to this configuration, when the blue light output is decreased based on the age of the user viewing the liquid crystal panel 1 being less than or equal to a certain age, it may be possible to restrict the large blue light output to the user (viewer) at an earlier age who is easily affected by the blue light. As a result, it may be possible to reduce the eye fatigue of the user (viewer) at the earlier age.

### (Eighth Example)

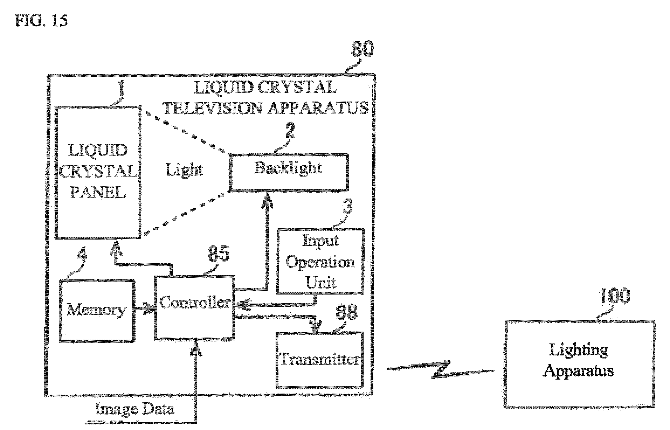

Next, embodiments of the eighth example will be described below with reference to FIG. 15. According to one or more embodiments of the eighth example, in addition to the control of one or more embodiments of the first example, an example of control to change a color of light of lighting apparatus 100 to a warm color in a room where the liquid crystal television apparatus 80 is located. Furthermore, configurations similar to the configurations of one or more embodiments of the first example have same reference numbers and are illustrated, and the description will be omitted. The liquid crystal television apparatus 80 is an example of the "display device".

As shown in FIG. 15, according to one or more embodiments of the eighth example, the lighting apparatus 100 may be located in the room where the liquid crystal television apparatus 80 is located. The lighting apparatus 100 may emit warm color light and cold color light by switching the warm color light and the cold color light. The warm color light is illumination light of a tone of a warm color such as a light tinged with orange or yellow and of low color temperature. The cold color light is illumination light of a tone of a cold color.

The liquid crystal television apparatus 80 may further comprise a transmitter 88. The transmitter 88 may transmit, to the lighting apparatus 100, a signal to change a color of light emitted by the lighting apparatus 100 from a cold color under the control of the controller 85.

The controller 85 may control to obtain the cumulative value (cumulative point) of the blue light output amount from the liquid crystal panel 1 during the first time period. The controller 85 may control to decrease the blue light output from the liquid crystal panel 1 based on the obtained cumulative value (cumulative point).

The controller 85 may cause the transmitter 88 to output the signal to change the color of the light from the lighting apparatus 100 from the cold color to the warm color to the lighting apparatus 100 when the blue light output from the liquid crystal panel 1 is decreased.

According to one or more embodiments of the eighth example, one or more of the following effects can be obtained.

According to one or more embodiments of the eighth example like one or more embodiments of the first example, the controller 85 may obtain the cumulative value of the blue light output amount that is sequentially output from the liquid crystal panel 1 during the first time period during which the liquid crystal panel 1 continuously displays the image, and may decrease the blue light output from the display screen in accordance with the obtained cumulative value. As a result, decreasing the blue light output from the liquid crystal panel 1 appropriately may cause the eye fatigue of the user to be reduced, while preventing the unnecessary changes of the white balance of the image.

According to one or more embodiments of the eighth example, as described above, the liquid crystal television apparatus 80 may include the transmitter 88 that transmits the signal to change a color of light to the warm color and the color of light is emitted from the lighting apparatus 100 in the room where the liquid crystal panel 1 is located. Furthermore, the controller 85 may cause the transmitter 85 to transmit the signal when the controller 85 controls to decrease the blue light output from the liquid crystal panel 1. According to this configuration, changing the light from the lighting apparatus 100 to the warm color which has a complementary color relationship with blue may cause to emphasize the display of blue. As a result, it may be possible to prevent discomfort for the user (viewer) for the liquid crystal panel 1 which decreasingly outputs the blue light. The complementary colors are any two colors that are directly opposite each other on a color circle (color wheel), such as an opposite color pair of blue and orange.

### (Ninth Example)

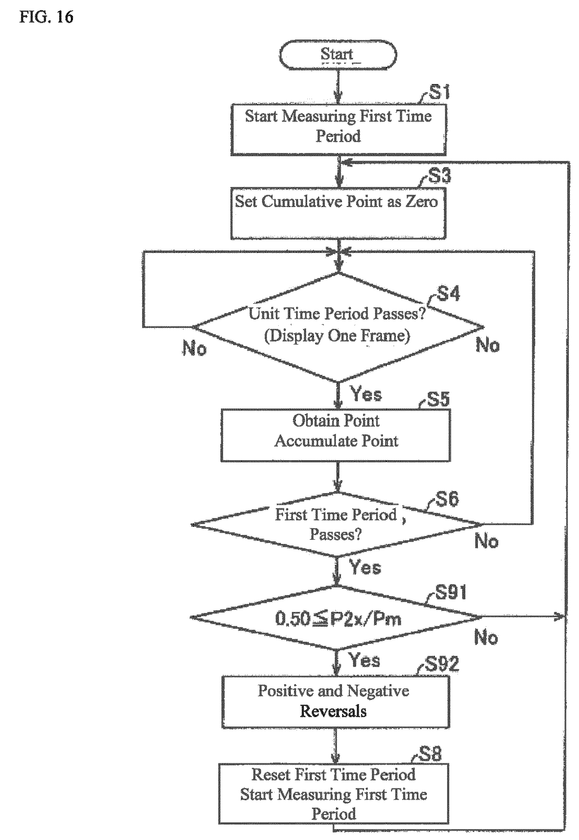

Next, embodiments of a ninth example will be described below with reference to FIGS. 1 and 16. According to one or more embodiments of the ninth example, the blue light output from the liquid crystal panel 1 may be decreased by switching so that the image displayed on the liquid crystal panel 1 is displayed with the complementary color (that is, positive and negative reversals), differing from one or more embodiments of the first example where the blue light output from the liquid crystal panel 1 is decreased by changing the gradation of the blue light of the liquid crystal panel 1 in accordance with the cumulative value of the blue light output amount. Furthermore, configurations similar to the configurations of one or more embodiments of the first example have same reference numbers and are illustrated, and the description will be omitted.

As shown in FIG. 1, in the liquid crystal television apparatus 90 according to one or more embodiments of the ninth example, the controller 95 may obtain the cumulative value (cumulative point (P2x)) of the blue light output amount that is sequentially output from the liquid crystal panel 1 during the first time period. The liquid crystal television apparatus 90 is an example of the "display device".

The controller 95 may switch the image displayed on the liquid crystal panel 1 so as to be displayed with a complementary color (that is, positive and negative reversals) in proportion to the ratio of the cumulative value (cumulative point (P2x)) of the blue light output amount from the liquid crystal panel 1 in the first time period and the maximum cumulative value (maximum cumulative point (Pm)) of when the maximum blue light output amount capable of being output by the liquid crystal panel 1 continues in the first time period. Furthermore, the controller 95 may decrease the blue light output from the liquid crystal panel 1 by the switch of the image. For example, the controller 95 may switch from blue to orange, which is the complementary color of blue. For example, when the image displayed on the liquid crystal panel 1 is composed of three colors such as red (R), green (G), and blue (B), the controller 95 may decrease blue and increase red and green.

The controller 95 may perform the positive and negative reversals when the maximum cumulative point capable of being obtained in the first time period is (Pm) and (P2x/Pm) is more than or equal to 0.50, and then the controller 95 may decrease the blue light output.

Next, a control processing flow to decrease the blue light by the controller 95 will be described below with reference to FIGS. 1 and 16. Furthermore, in the description below, processing similar to processing (step) of FIG. 3 in one or more embodiments of the first example has the same reference number and the description will be omitted.

First, after the steps S 1-S6, the controller 95 may accumulate the blue light output amount (point) during the first time period.

At a step S91, the controller 95 may determine whether the ratio (P2x/Pm) of the cumulative point (P2x) to the maximum cumulative point (Pm) is more than or equal to 0.50 or not. When the ratio (P2x/Pm) is less than 0.50, processing returns to the step S3. On the other hand, when the ratio (P2x/Pm) is more than or equal to 0.50, processing proceeds to a step 92.

At the step S92, the controller 95 may perform the positive and negative reversals of the liquid crystal panel 1. Then, processing proceeds to the step 8. Furthermore, the positive and negative reversals may be performed by taking the predetermined time so that the color of the liquid crystal panel 1 is gradually changed to the complementary color at a constant rate (temporarily).

According to one or more embodiments of the ninth example, one or more of the following effects can be obtained.

According to one or more embodiments of the ninth example, like one or more embodiments of the first example, the controller 95 may obtain the cumulative value of the blue light output amount that is sequentially output from the liquid crystal panel 1 during the first time period during which the liquid crystal panel 1 continuously displays the image, and may decrease the blue light output from the display screen in accordance with the obtained cumulative value. As a result, decreasing the blue light output from the liquid crystal panel 1 appropriately may cause the eye fatigue of the user to be reduced, while preventing the unnecessary changes of the white balance of the image.

According to one or more embodiments of the ninth example, as described above, the controller 95 may obtain the cumulative value of the blue light output amount that is sequentially output from the liquid crystal panel 1 during the first time period, and may decrease the blue light output from the liquid crystal panel 1 in accordance with the obtained cumulative value by switching the image displayed on the display screen so as to be displayed with a complementary color. According to this configuration, it may be possible to decrease the blue light output by switching so that the image displayed on the liquid crystal panel 1 is displayed with the complementary color (that is, positive and negative reversals) instead of decreasing the blue light directly. As a result, it may be possible to decrease the blue light output using simplified processing such as the positive and negative reversals.

### (Tenth Example)

According to one or more embodiments of a tenth example of the present invention, the controller 5 may restrict a decreasing amount of the decreased blue light output from the display screen based on a distance from the the liquid crystal panel 1 to the viewer. Configurations of a liquid crystal television apparatus of one or more embodiments of the tenth example may be similar to the configurations of the liquid crystal television apparatus 10 of one or more embodiments of the first example.

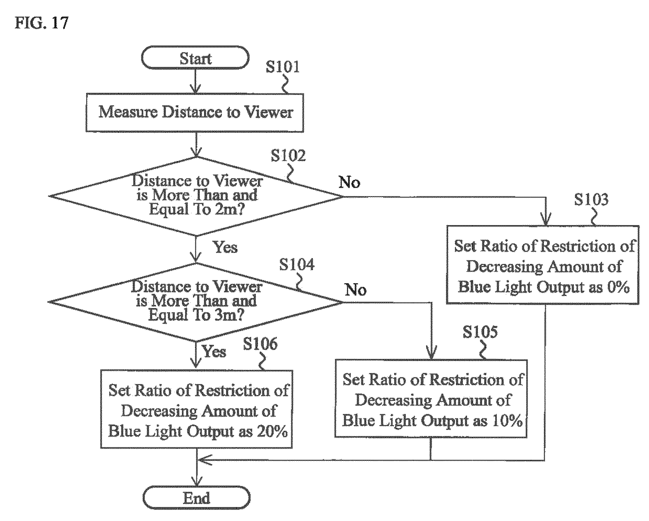

As show in FIG. 17, at a step S101, the controller 5 may measure distance from the liquid crystal panel 1 to the viewer. At a step S102, the controller 5 may determine whether the distance to the viewer is more than or equal to 2 meters, for example. For example, the controller 5 may determine the distance to the viewer based on a parallax amount of a twin-lens camera or a time difference of when a microphone of a remote controller receives sounds from the liquid crystal television apparatus.

When the distance is determined to be less than 2 meters in the step S102, at a step S103, the controller 5 may set a ratio of a restriction of the decreasing amount of the blue light output as zero percent. The decreasing amount is the amount of the blue light output decreased by the controller 5 in accordance with the obtained cumulative value, as described above. The controller 5 may adjust the decreasing amount of the blue light output by multiplying the ratio of the restriction of the decreasing amount. For example, when the ratio of the restriction is zero percent, the decreasing amount of the blue light output is not restricted.

On the other hand, when the distance is determined to be more than or equal to 2 meters in the step S102, at a step S104, the controller 5 may determine whether the distance to the viewer is more than or equal to 3 meters.

When the distance is determined to be less than 3 meters in the step S104, at a step S105, the controller 5 may set the ratio of the restriction of the decreasing amount of the blue light output as 10 percent. For example, when the ratio of the restriction is 10 percent, the decreasing amount of the blue light output is decreased by 10 percent.

On the other hand, when the distance is determined to be more than or equal to 3 meters in the step S104, at a step S106, the controller 5 may set the ratio of the restriction of the decreasing amount of the blue light output as 20 percent.

Thus, according to one or more embodiments of the tenth example, the controller 5 may detects a distance to the viewer, and may restrict the decreasing amount of the decreased blue light output from the liquid crystal panel 1 based on the detected distance.

### (Eleventh Example)

According to one or more embodiments of an eleventh example of the present invention, the controller 5 may restrict a decreasing amount of the decreased blue light output from the display screen based on illuminance of ambient light around the liquid crystal panel 1 in addition to the distance to the viewer. Configurations of a liquid crystal television apparatus of one or more embodiments of the eleventh example may be similar to the configurations of the liquid crystal television apparatus 10 of one or more embodiments of the first example. Furthermore, the liquid crystal television apparatus according to embodiments of the eleventh example may include an illuminance sensor such as the illuminance sensor 66. Furthermore, configurations similar to the configurations of embodiments of the tenth example have same reference numbers and are illustrated, and the description will be omitted.

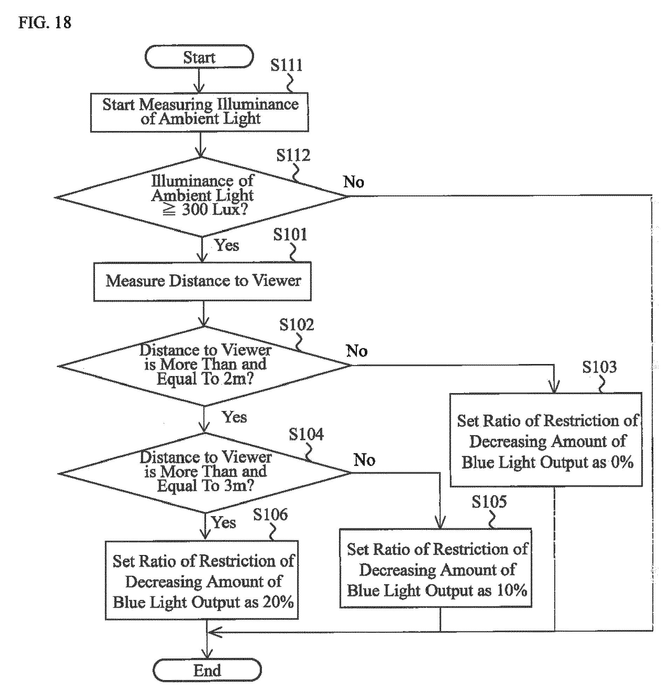

As shown in FIG. 18, at a step S111, the controller 5 may cause the illuminance sensor to start measuring the illuminance of the ambient light around the liquid crystal panel. At a step S 112, the controller 5 may determine whether the measured illuminance of the ambient light is more than or equal to predetermined brightness such as 300 lux or not. When the measured illuminance of the ambient light determined to be more than or equal to 300 lux, proceeding proceeds to the step S101.

Thus, according to one or more embodiments of the eleventh example, the illuminance sensor may detect the illuminance around the liquid crystal panel 1, and the controller 5 may restrict the decreasing amount when the detected illuminance is more than or equal to predetermined brightness.

### (Twelfth Example)

According to one or more embodiments of an twelfth example of the present invention, the controller 5 may measure time during power is continuously not supplied to the display screen, and may restrict the decreasing amount of the decreased blue light output from the display screen based on the measured time. Configurations of a liquid crystal television apparatus of one or more embodiments of the twelfth example may be similar to the configurations of the liquid crystal television apparatus 10 of one or more embodiments of the first example.

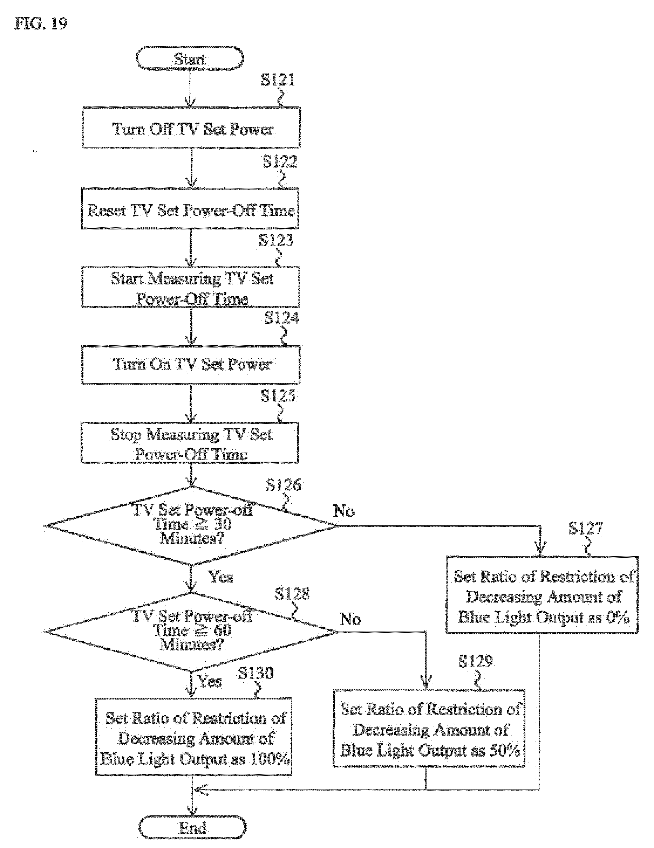

As show in FIG. 19, at a step S121, TV (liquid crystal television apparatus 10) set power may be turned off. At a step S122, the controller 5 may reset a TV set power-off time. The TV set power-off time may be time during power is continuously not supplied to the liquid crystal panel 1. At a step S123, the controller 5 may start measuring the TV set power-off time. At a step S124, the TV set power may be turned on. At a step S125, the controller 5 may stop measuring the TV set power-off time. At a step S126, the controller 5 may determine whether the measured TV set power-off time is more than or equal to 30 minutes or not.

When the measured TV set power-off time determined to be less than 30 minutes in the step S126, at a step S127, the controller 5 may set a ratio of a restriction of the decreasing amount of the blue light output as zero percent.

On the other hand, when the measured TV set power-off time determined to be more than or equal to 30 minutes in the step S126, at a step S128, the controller 5 may determine whether the measured TV set power-off time is more than or equal to 60 minutes or not.

When the measured TV set power-off time determined to be less than 60 minutes in the step S128, at a step S129, the controller 5 may set a ratio of a restriction of the decreasing amount of the blue light output as 50 percent.

On the other hand, when the measured TV set power-off time determined to be more than or equal to 60 minutes in the step S130, the controller 5 may set a ratio of a restriction of the decreasing amount of the blue light output as 100 percent.

Thus, according to one or more embodiments of the twelfth example, the controller 5 may measure time during power is continuously not supplied to the liquid crystal panel 1, and may restrict the decreasing amount of the decreased blue light output from the liquid crystal panel 1 based on the measured time.

### (Thirteenth Example)

According to one or more embodiments of a thirteenth example of the present invention, like embodiments of the twelfth example, the controller 5 may measure time during power is continuously not supplied to the display screen, and may restrict the decreasing amount of the decreased blue light output from the display screen based on the measured time. Furthermore, configurations similar to the configurations of embodiments of the twelfth example have same reference numbers and are illustrated, and the description will be omitted.

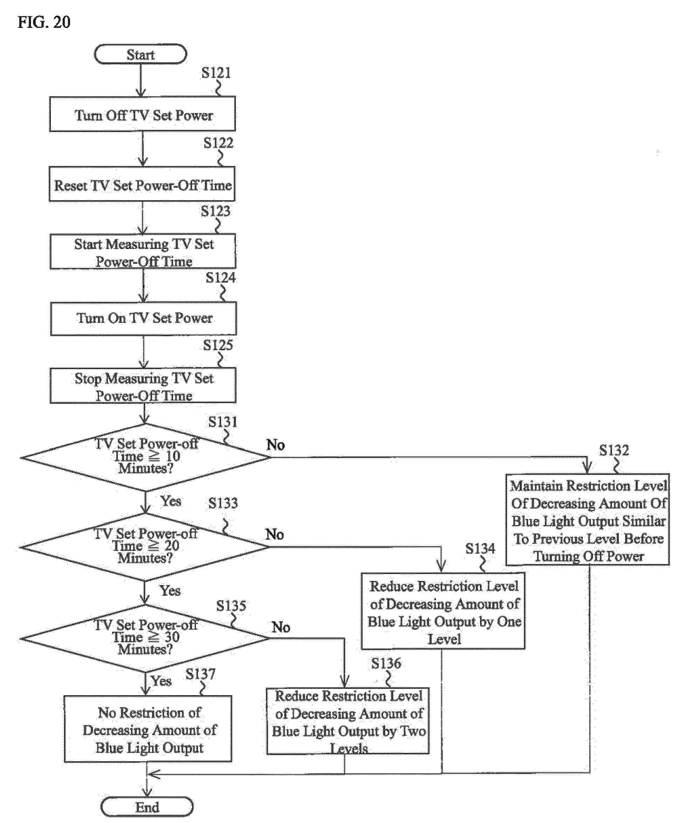

As shown in FIG. 20, at steps S131, S133, and S135, the controller 5 may determine whether the measured TV set power-off time is more than or equal to 10, 20, and 30 minutes, respectively. When the measured TV set power-off time determined to be less than 10, 20, and 30 minutes at the steps S131, S133, and S135, respectively, the steps S131, S133, and S135 proceed to steps S132, S134, and S136, respectively. On the other hand, when the measured TV set power-off time determined to be more than or equal to 10, 20, and 30 minutes at the steps S131, S133, and S135, respectively, the steps S131, S133, and S135 proceed to steps S133, S135, and S137. For example, at the steps S132, S134, S136, and S137, the controller 5 may adjust to reduce a restriction level of the decreasing amount of the decreased blue light output from the liquid crystal panel 1. For example, at the step S 134, the controller 5 may reduce the restriction level of the decreasing amount of the blue light output by one level. The restriction level may be an indicator that a degree of the restriction of the decreasing amount.

Furthermore, the above embodiments disclosed herein are a mere example in every aspect and do not limit the invention. The scope of the present invention is defined by the claims, not by the aforementioned description and, also, can include all changes (modified examples) falling within the claims. Moreover, the features of the above embodiments can be combined with each other according to various combinations, not limited to the specific combinations disclosed herein.

For example, according to one or more embodiments of the first to thirteenth examples, the examples of the liquid crystal television apparatus has been shown, but the present invention is not limited to the examples. One or more embodiments of the present invention may be applied to a display device except for the liquid crystal television apparatus.

Furthermore, one or more embodiments of the seventh example are illustrated where the facial image of the user (viewer) is obtained via the camera and whether the age of the user (viewer) is less than or equal to the certain age is determined, but the present invention is not limited thereto. According to one or more embodiments of the present invention, for example, the user (viewer) may input the age of the user via the input operation unit.

Furthermore, one or more embodiments of the first to thirteenth examples are illustrated where the blue light output is decreased in accordance with the blue light output in one frame (unit time period), but the present invention is not limited thereto. According to one or more embodiments of the present invention, for example, the blue light output may be decreased in accordance with the blue light output in a plurality of frames (unit time period).

Furthermore, one or more embodiments of the fourth to ninth examples are illustrated where the blue light output is further decreased, in addition to the control to decrease the blue light output from the display screen based on the cumulative value of the blue light in the first time period, based on displaying the image on the display screen continuously during the second time period, the current time being within the predetermined time slot, the age of the user viewing the display screen being less than or equal to the certain age, or the illuminance around the display screen being less than or equal to the predetermined brightness, but the present invention is not limited thereto. According to one or more embodiments of the present invention, the blue light output may be further decreased, in addition to the control to decrease the blue light output from the display screen based on the cumulative value of the blue light in the first time period, based on at least two of displaying the image on the display screen continuously during the second time period, the current time being within the predetermined time slot, the age of the user viewing the display screen being less than or equal to the certain age, and the illuminance around the display screen being less than or equal to the predetermined brightness.

Furthermore, one or more embodiments of the first to ninth examples are illustrated where each pixel of the liquid crystal panel 1 has the eight-bit image information (color information), but the present invention is not limited thereto. According to one or more embodiments of the present invention, each pixel of the liquid crystal panel 1 may have image information (color information) except for the eight-bit image information. For example, each pixel of the liquid crystal panel 1 may have four-bit image information (color information).

Furthermore, one or more embodiments of the first to eighth examples are illustrated where the lower limit value to be used for decreasing the blue light output is provided, but the present invention is not limited thereto. According to one or more embodiments of the present invention, the lower limit value may not be provided for decreasing the blue light output.

Furthermore, one or more embodiments of the first to thirteenth examples are illustrated where the blue light output is gradually decreased at the constant rate linearly, but the present invention is not limited thereto. According to one or more embodiments of the present invention, for example, the blue light output may be decreased without taking much time. For example, the blue light output may be decreased in stages.

Furthermore, one or more embodiments of the first to thirteenth examples are illustrated where the blue light output is obtained based on the gradation of the liquid crystal panel and the backlight duty of the backlight, but the present invention is not limited thereto. According to one or more embodiments of the present invention, for example, a light sensor to obtain the blue light output may be provided.

Furthermore, one or more embodiments of the third example is illustrated where when the blue light output is 100 percent and when the blue light output is restricted to 80 percent, 70 percent, and 60 percent, if the gradation signal is more than the predetermined value A, the blue light output may be decreased, but the present invention is not limited thereto. According to one or more embodiments of the present invention, for example, only when the blue light output is 100 percent (only when the blue light output is not restricted), if the gradation signal is more than the predetermined value A, the blue light output may be decreased.

### [Explanation of References]

1 Liquid crystal panel (display screen)
2 Backlight (light source)
5, 25, 35, 45, 55, 65, 75, 85, 95 Controller
10, 20, 30, 40, 50, 60, 70, 80, 90 Liquid crystal television apparatus (display device)
88 Transmitter
100 Lighting apparatus

## Claims

1. A display device comprising:
a display screen (1) that displays an image; and
a controller (5, 25, 35, 45, 55, 65, 75, 85, 95) that:
obtains a first cumulative value of a blue light output amount from the display screen (1) during a first time period during which the display screen continuously displays the image; and
decreases a blue light output from the display screen (1) based on the first cumulative value.

2. The display device according to claim 1, wherein
the controller decreases the blue light output from the display screen based on a first ratio of the first cumulative value and a second cumulative value,
the second cumulative value is a cumulative value of the blue light output amount during the first time period, and
the blue light output amount is greater than or equal to a first predetermined value.

3. The display device according to claim 1, further comprising:
a light source that emits light to the display screen, wherein
the controller decreases the blue light output based on a second ratio of a fourth cumulative value and a third cumulative value,
the third cumulative value is a cumulative value of a first light output amount from the light source during the first time period,
the fourth cumulative value is a cumulative value of a second light output amount from the light source during the first time period,
the first light output amount is greater than or equal to a second predetermined value, and
the second light output amount is output based on a predetermined setting of the light source.

4. The display device according to any one of claims 1 to 3, wherein the controller decreases the blue light output while maintaining a light output other than the blue light from the display screen.

5. The display device according to any one of claims 1 to 4, further comprising:
a transmitter (88) that transmits a signal to change a color of light to a warm color, wherein the color of light is emitted from a lighting apparatus (100) in a room where the display screen (1) is located, wherein
the controller (85) causes the transmitter to transmit the signal.

6. The display device according to any one of claims 1 to 5, wherein the controller switches the image displayed on the display screen to be displayed with a complementary color based on the first cumulative value and decreases the blue light output.

7. The display device according to any one of claims 1 to 6, wherein
the controller obtains gradation of the blue light based on a predetermined constant of proportionality,
the predetermined constant of proportionality differs on whether a signal transmitted to the display screen is more than or equal to a predetermined value.

8. The display device according to any one of claims 1 to 7, wherein
the controller comprises a plurality of converters that convert an input signal that indicates a gradation value of an input image into an output signal that indicates a gradation value of an image output to the display screen,
the plurality of converters correspond to different values of the first cumulative value,
the controller converts the gradation value using one of the plurality of converters selected based on the first cumulative value.

9. The display device according to any one of claims 2 to 7, wherein
the controller comprises a plurality of converters that convert an input signal that indicates a gradation value of an input image into an output signal that indicates a gradation value of an image output to the display screen,
the plurality of converters correspond to the first ratio,
the controller converts the gradation value using one of the plurality of converters selected based on the first ratio.

10. The display device according to any one of claims 3 to 7, wherein
the controller comprises a plurality of converters that convert an input signal that indicates a gradation value of an input image into an output signal that indicates a gradation value of an image output to the display screen,
the plurality of converters correspond to the second ratio, and
the controller converts the gradation value using one of the plurality of converters selected based on the second ratio.

11. The display device according to claim 8, further comprising:
an input operation unit that receives input of designation of one of the plurality of the converters, wherein
the controller determines a candidate to be used for conversion from among the plurality of converters.

12. The display device according to any one of claims 1 to 11, wherein
the controller:
detects a distance to a viewer, and
restricts a decreasing amount of the decreased blue light output from the display screen based on the detected distance.

13. The display device according to claim 12, further comprising:
an illuminance sensor that detects illuminance around the the display screen, wherein
the controller restricts the decreasing amount when the detected illuminance is more than or equal to predetermined brightness.

14. The display device according to any one of claims 1 to 13, wherein
the controller:
measures time during the display screen does not continuously display the image, and
restricts a decreasing amount of the decreased blue light output from the display screen based on the measured time.

15. The display device according to claim 8, wherein
the controller:
measures time the display screen does not continuously display the image, and
switches from the selected converter to another converter based on the measured time.
